# EUROPÄISCHE PATENTSCHRIFT

(11) **EP 3 100 296 B1**
(45) Veröffentlichungstag und Bekanntmachung des Hinweises auf die Patenterteilung: **24.05.2023**
(21) Anmeldenummer: 14819035.8
(22) Anmeldetag: 24.12.2014
(51) Int. Cl.: H01H 33/56, H02B 13/065

(54) **ELEKTRISCHES SCHALTGERÄT**
ELECTRIC SWITCHING DEVICE
APPAREIL DE COUPURE ÉLECTRIQUE

(30) Priorität: 29.01.2014 DE 102014201576
(43) Veröffentlichungstag der Anmeldung: 07.12.2016
(73) Patentinhaber: General Electric Technology GmbH, 5400 Baden (CH)
(72) Erfinder: STELTER, Achim, 34128 Kassel (DE); MAGAZIN, Klaus-Peter, 34537 Bad Wildungen (DE)
(74) Vertreter: Brevalex
(86) Internationale Anmeldenummer: PCT/EP2014/079310
(87) Internationale Veröffentlichungsnummer: WO 2015/113717

(56) Entgegenhaltungen:
- EP-A1- 1 632 700
- EP-A1- 1 906 424
- DE-B3- 10 324 874
- DE-U1- 20 113 638
- DE-U1- 29 619 328
- DE-U1-202007 013 841
- US-A- 6 148 851
- US-A1- 2013 215 548
- US-B1- 6 263 914

## Beschreibung

Die Erfindung betrifft ein elektrisches Schaltgerät mit mindestens einem mit Isoliergas gefüllten Schaltgerätepol und mit einer Überwachungseinrichtung, die einen Dichtewächter und ein Gehäuseteil aufweist, wobei in dem Gehäuseteil ein Gasraum enthalten ist, der mit dem Schaltgerätepol und dem Dichtewächter verbunden ist, und der mit einer Prüfvorrichtung für den Dichtewächter verbindbar ist, und wobei das Gehäuseteil ein Absperrorgan enthält, das in eine geöffnete und eine geschlossene Stellung betätigbar ist.

Ein derartiges elektrisches Schaltgerät mit einer einen Dichtewächter und ein Gehäuseteil aufweisenden Überwachungseinrichtung ist aus der DE 10 2007 016 720 A1 bekannt. Dort ist das Gehäuseteil mit einem Ventil versehen, wobei das Ventil durch ein Auf- bzw. Abschrauben einer Verschlusskappe geöffnet bzw. geschlossen werden kann. Bei abgeschraubter Verschlusskappe kann eine Prüfvorrichtung mit dem Gehäuseteil verbunden werden. Die Betätigung des Ventils ist also abhängig von dem Anschluss der Prüfvorrichtung. Dies hat zur Folge, dass das Ventil nicht geöffnet werden kann, wenn die Prüfvorrichtung beispielsweise über einen längeren Zeitraum angeschlossen bleiben soll.

Ein Dichtewächter ist beispielsweise aus der DE 102 42 443 B4 bekannt. Der dortige Dichtewächter ist dazu vorgesehen, mit Hilfe einer Druck- und einer Temperaturmessung ein elektrisches Signal genau dann zu erzeugen, wenn die Dichte eines zu überwachenden Isoliergases einen Grenzwert unter- oder überschreitet.

Aufgabe der Erfindung ist es, das aus der DE 10 2007 016 720 A1 bekannte Schaltgerät zu verbessern. [ SEITE 1a einführen ]

Die Erfindung löst diese Aufgabe durch ein elektrisches Schaltgerät nach dem Anspruch 1.

Erfindungsgemäß ist dabei vorgesehen, dass die Betätigung des Absperrorgans unabhängig ist von der Verbindung des Gasraums mit der Prüfvorrichtung.

Aufgrund der von der Prüfvorrichtung völlig unabhängigen Betätigung des US 6 263 914 B1 beschreibt eine Anordnung zur Dichtemessung in einem Hochspannungsschaltgerät. Die Anordnung ist direkt an einer Außenoberfläche eines Schaltgerätegehäuses angebracht und stellt elektrische Signale bereit, die die Gasdichte in dem Inneren des Gehäuses charakterisieren.

US 2013/215548 A1 beschreibt ein Überwachungssystem für ein Behältnis mit Löschgas.

DE 20 2007 013841 U1 beschreibt ein elektrisches Schaltgerät.

DE 103 24 874 B3 beschreibt ein Ventil, insbesondere Dampfventil.

EP 1 632 700 A1 beschreibt eine Ventilvorrichtung, insbesondere für Farb- und Lackiereranlagen.

DE 296 19 328 U1 beschreibt eine Armatur für fluide Medien.

US 6 148 851 A beschreibt einen Apparat für ein Ventil. Absperrorgans kann das Absperrorgan immer in seine geöffnete oder geschlossene Stellung geschaltet werden, also völlig unabhängig davon, ob eine Prüfvorrichtung angeschlossen ist oder nicht. Damit wird der Einsatzbereich der Überwachungseinrichtung erweitert. Beispielsweise kann die Prüfvorrichtung über einen längeren Zeitraum mit dem Gehäuseteil verbunden bleiben und das Absperrorgan kann trotzdem geöffnet und geschlossen werden.

Bei einer Weiterbildung der Erfindung weist das Gehäuseteil einen Kanal auf, über den der Gasraum mit dem Schaltgerätepol verbunden ist, wobei das Absperrorgan im Verlauf des Kanals angeordnet ist. Damit wird erreicht, dass in der geschlossenen Stellung des Absperrorgans der Gasraum nicht mit dem Schaltgerätepol verbunden ist.

Bei einer anderen Weiterbildung der Erfindung ist das Absperrorgan zum Hin- und Herschalten zwischen der geöffneten und der geschlossenen Stellung drehbar ausgebildet. Dies kann vorzugsweise dadurch erreicht werden, dass das Absperrorgan ein Kugelventil oder ein Kükenventil oder dergleichen aufweist.

Bei einer anderen Weiterbildung der Erfindung ist ein Hebel vorgesehen, der mit dem Absperrorgan drehfest gekoppelt ist, und der zur Betätigung des Absperrorgans vorgesehen ist. Der Hebel erlaubt einer Bedienperson ein einfaches Betätigen und Umschalten des Absperrorgans.

Besonders vorteilhaft ist es, wenn der Hebel in der geschlossenen Stellung des Absperrorgans ein Anzeigefeld des Dichtewächters zumindest teilweise verdeckt. Damit kann der Bedienperson deutlich gemacht werden, dass der Dichtewächter momentan nicht die Dichte des Isoliergases in dem Schaltgerätepol des Schaltgeräts überwacht.

Bei einer anderen Weiterbildung der Erfindung ist der Hebel mit einer Lasche versehen, die in der geöffneten Stellung des Absperrorgans in eine mit dem Gehäuseteil verbundene Öffnung einrastbar ist. Damit kann ein unbeabsichtigtes Betätigen des Hebels in die geschlossene Stellung des Absperrorgans vermieden werden.

Weitere Merkmale, Anwendungsmöglichkeiten und Vorteile der Erfindung ergeben sich aus der nachfolgenden Beschreibung von Ausführungsbeispielen der Erfindung, die in zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

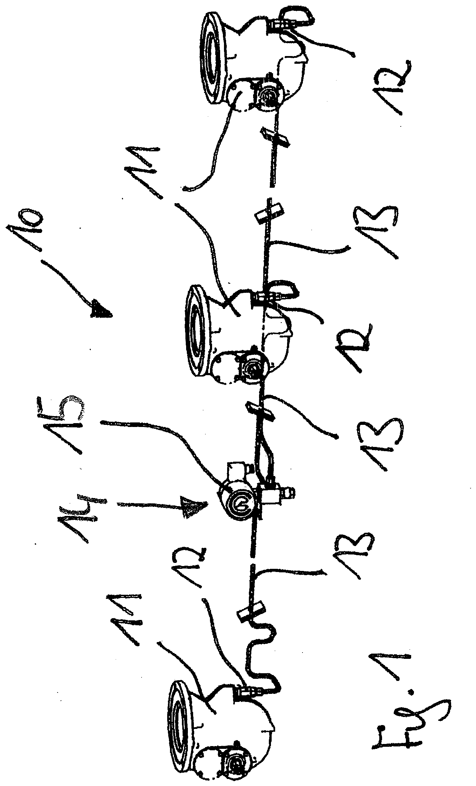

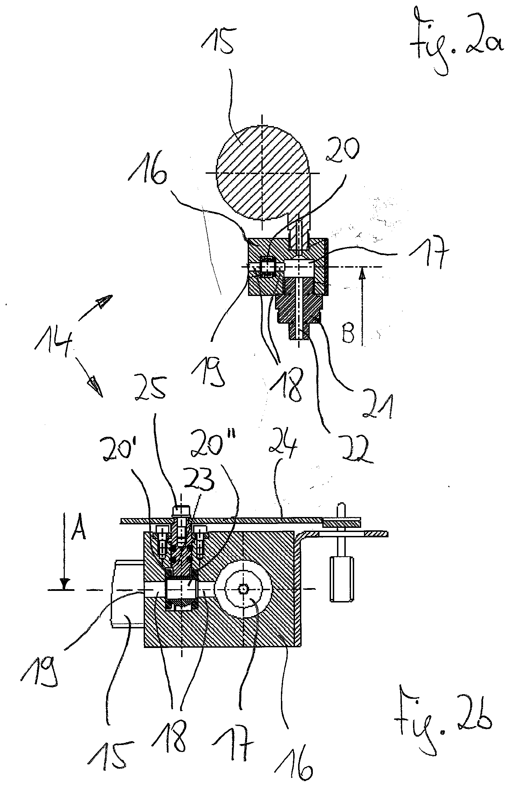

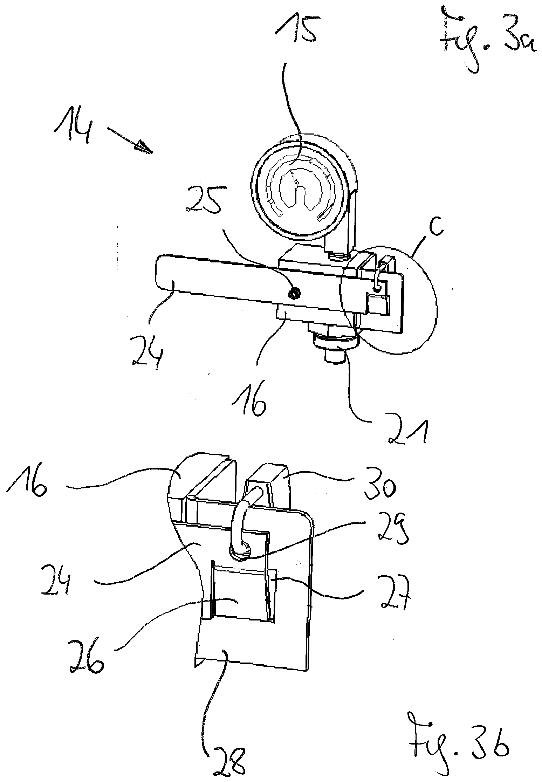

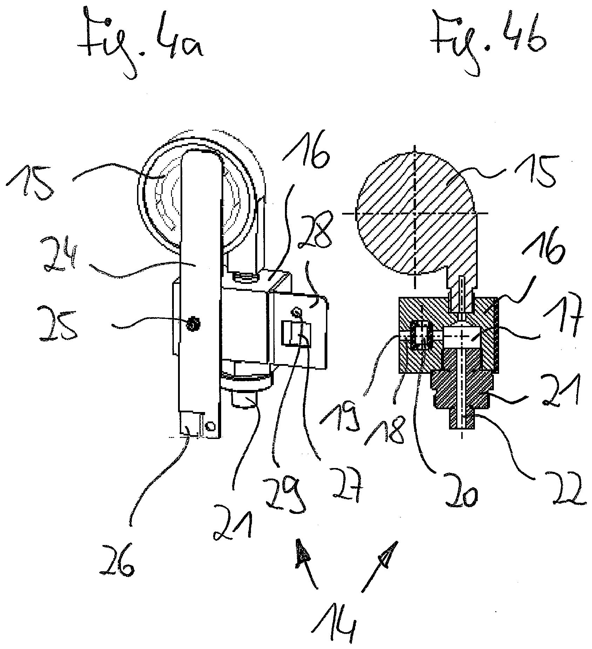

Figur 1 zeigt eine schematische Perspektivdarstellung eines Teils eines elektrischen Schaltgeräts mit einer Überwachungseinrichtung für ein Isoliergas, Figur 2a zeigt eine schematische Schnittdarstellung der Überwachungseinrichtung in der Ebene A der Figur 2b, Figur 2b zeigt eine schematische Schnittdarstellung der Überwachungseinrichtung in der Ebene B der Figur 2a, Figur 3a zeigt eine schematische Ansicht der Überwachungseinrichtung mit geöffnetem Absperrorgan, Figur 3b zeigt eine schematische vergrößerte Darstellung des Details C der Figur 3a, und Figuren 4a und 4b zeigen eine schematische Ansicht und eine schematische Schnittdarstellung der Überwachungsvorrichtung mit geschlossenem Absperrorgan.

Die Figur 1 bezieht sich beispielhaft auf einen Hochspannungsleistungsschalter in Freiluftausführung mit drei Leistungsschalterpolen und mit einer Überwachungseinrichtung. Es ist möglich, dass die Überwachungseinrichtung auch den jeweiligen Gasräumen einer gasisolierten Mittel- oder Hochspannungsschaltanlage zugeordnet ist, wie beispielsweise einem Leistungsschaltergasraum oder einem Trenn- und/oder Erdungsschaltergasraum oder einem Sammelschienengasraum oder einem Messwandlergasraum oder dergleichen.

Die Figur 1 betrifft ein dreipoliges elektrisches Schaltgerät 10, mit dem eine Hochspannung ein- und ausgeschaltet werden kann. In der Figur 1 sind drei Kurbelkästen 11 gezeigt, auf deren Oberseite jeweils ein Leistungsschalterpol bzw. ganz allgemein ein Schaltgerätepol montiert werden kann. Im Inneren der Kurbelkästen 11 ist jeweils die Antriebsmechanik für die Leistungsschalterpole enthalten. Das weitere Antriebsgestänge, mit dem die drei Kurbelkästen 11 miteinander und mit einem Antriebskasten verbunden sind, ist in der Figur 1 nicht gezeigt.

Alle drei Kurbelkästen 11 sowie die zugehörigen Leistungsschalterpole sind mit einem Isoliergas, beispielsweise mit Schwefelhexafluorid SF6, gefüllt. Zum Befüllen sind die Kurbelkästen 11 jeweils mit einer Füllkupplung 12 versehen. Gemäß der Figur 1 sind die drei Füllkupplungen 12 über eine Rohrverbindung 13 mit einer Überwachungseinrichtung 14 gasdicht verbunden. Diese Überwachungseinrichtung 14 kann im Bereich des Schaltgeräts 10, aber auch unabhängig davon angeordnet sein.

Im Betrieb der Leistungsschalterpole muss das Isoliergas in den Leistungsschalterpolen eine vorgegebene Mindestdichte aufweisen. Zur Überwachung dieser Mindestdichte ist in der Überwachungseinrichtung 14 ein Dichtewächter 15 enthalten. Der in den Leistungsschalterpolen und den Kurbelkästen 11 auf das Isoliergas einwirkende Druck wird über die Füllkupplungen 12 und die Rohrverbindungen 13 an die Überwachungseinrichtung 14 und damit an den Dichtewächter 15 weitergegeben. Der Dichtewächter 15 in der Überwachungseinrichtung 14 ermittelt in Abhängigkeit von diesem Druck, ob die Dichte des in den Kurbelkästen 11 vorhandenen Isoliergases die vorgegebene Mindestdichte unterschreitet. Ist dies der Fall, so löst der Dichtewächter 15 ein Alarmsignal oder eine sonstige Reaktion aus.

Der Dichtewächter 15 ist weiterhin derart ausgebildet, dass der auf ihn einwirkende Druck auf einem Anzeigefeld mit Hilfe eines Messzeigers zur Anzeige gebracht wird. Es versteht sich, dass diese Anzeige auch andersartig ausgebildet sein kann.

Eine Voraussetzung für eine korrekte Überwachung der Mindestdichte besteht darin, dass der Dichtewächter 15 keine Fehlfunktion oder unzulässige Ungenauigkeit oder dergleichen aufweist. Dies kann mit Hilfe der nachfolgend erläuterten Ausgestaltung der Überwachungseinrichtung 14 überprüft werden.

In den Figuren 2a und 2b ist die Überwachungseinrichtung 14 in zwei Schnittebenen dargestellt. Die Überwachungseinrichtung 14 weist den bereits erwähnten Dichtewächter 15 auf. Weiterhin weist die Überwachungseinrichtung 14 ein Gehäuseteil 16 auf, das einen Gasraum 17 enthält. Der Dichtewächter 15 ist gasdicht mit dem Gehäuseteil 16 verbunden, so dass das Isoliergas in dem Gasraum 17 den Dichtewächter 15 beaufschlagt und damit der Dichtewächter 15 die Dichte des Isoliergases überwacht und den Druck in dem Gasraum 17 auf seinem Anzeigefeld anzeigt.

In dem Gehäuseteil 16 erstreckt sich ein Kanal 18 ausgehend von dem Gasraum 17 zu einer Öffnung 19. Weiterhin ist in dem Gehäuseteil 16 im Verlauf des Kanals 18 ein Absperrorgan 20 untergebracht, das zwischen einer geöffneten Stellung und einer geschlossenen Stellung hin- und her bewegt werden kann. In der geöffneten Stellung kann Isoliergas von dem Gasraum 17 zu der Öffnung 19 fließen und umgekehrt, während der Gasraum 17 in der geschlossenen Stellung gasdicht von der Öffnung 19 abgetrennt ist. In den Figuren 2a und 2b ist die geöffnete Stellung gezeigt.

Das Absperrorgan 20 kann beispielsweise - wie noch beschrieben werden wird - im Wesentlichen ähnlich wie ein Kugelventil mit einer zentralen Durchgangsbohrung ausgebildet sein. Durch ein Drehen des Kugelventils um etwa 90 Grad kann dann die geöffnete und die geschlossene Stellung jeweils erreicht werden. Es wird darauf hingewiesen, dass das Absperrorgan 20 auch andersartig ausgebildet sein kann, beispielsweise in der Art eines sogenannten Kükenventils oder dergleichen.

Die Öffnung 19 des Gehäuseteils 16 ist in nicht-dargestellter Weise gasdicht mit der Rohrverbindung 13 und damit mit den mit Isoliergas gefüllten Kurbelkästen 11 verbunden.

Der Gasraum 17 in dem Gehäuseteil 16 wird unter anderem von einer Kupplung 21 begrenzt, die eine Durchgangsbohrung 22 in Längsrichtung nach außen aufweist. Die Kupplung 21 ist gasdicht mit dem Gehäuseteil 16 verbunden. Die Kupplung 21 ist derart ausgebildet, dass an sie von außen eine nicht-dargestellte Prüfvorrichtung gasdicht angeschlossen werden kann. Ist eine derartige Prüfvorrichtung mit der Kupplung 21 verbunden, so besteht eine Gasverbindung von dem Gasraum 17 über die Durchgangsbohrung 22 zu der Prüfvorrichtung.

Die Prüfvorrichtung dient im angeschlossenen Zustand der Überprüfung des Dichtewächters 15.

Die Kupplung 21 ist weiterhin in nicht-dargestellter Weise derart ausgebildet, dass - sofern keine Prüfvorrichtung angeschlossen ist - die Durchgangsbohrung 22 automatisch verschlossen wird, so dass kein Isoliergas über die Kupplung 21 aus dem Gasraum 17 entweichen kann. Dies kann beispielsweise mit Hilfe eines selbstschließenden Rückschlagventils realisiert werden.

Im Betrieb des elektrischen Schaltgeräts 10 ist üblicherweise keine Prüfvorrichtung an die Kupplung 21 angeschlossen und das Absperrorgan 20 befindet sich in seiner geöffneten Stellung. In diesem Fall wird somit von dem Dichtewächter 15 über den Gasraum 17, den Kanal 18 und die Rohrverbindungen 13 die Dichte des Isoliergases in den Kurbelkästen 11 gemessen und im Hinblick auf die Mindestdichte überwacht

Zum Zwecke eines Prüfbetriebs wird eine Prüfvorrichtung an die Kupplung 21 angeschossen und das Absperrorgan 20 wird in seine geschlossene Stellung umgeschaltet. Damit ist der Gasraum 17 von den Rohrverbindungen 13 abgetrennt. Der Gasraum 17 ist nur noch über die Kupplung 21 mit der Prüfvorrichtung verbunden. Das elektrische Schaltgerät 10 ist somit einerseits an sich weiterhin einsatzbereit, wird jedoch andererseits in dem Prüfbetrieb zumindest vorübergehend nicht mehr im Hinblick auf die Mindestdichte überwacht.

Die vorstehend genannte Betätigung des Absperrorgans 20 und die vorstehend ebenfalls genannte Verbindung der Prüfvorrichtung mit dem Gasraum 17 sind dabei unabhängig voneinander. Es kann also zuerst das Absperrorgan 20 betätigt und dann erst die Prüfvorrichtung an die Kupplung 21 angeschlossen werden oder dies kann auch in umgekehrter Reihenfolge stattfinden. Ebenfalls ist es möglich, dass die Prüfvorrichtung über einen längeren Zeitraum an die Kupplung 21 angeschlossen bleibt und das Umschalten in den Prüfbetrieb dann mittels der alleinigen Betätigung des Absperrorgans 20 erreichbar ist.

Bei der vorgenannten Prüfvorrichtung kann es sich um eine bekannte Prüfvorrichtung handeln, die üblicherweise zumindest die folgenden Eigenschaften besitzt. So weist die Prüfvorrichtung einen kalibrierten Referenz-Drucksensor auf, mit dem der über die Kupplung 21 anstehende Druck gemessen werden kann. Weiterhin ist die Prüfvorrichtung derart ausgebildet, dass Isoliergas von der Kupplung 21 zu der Prüfvorrichtung fließen und damit dem Gasraum 17 entnommen werden kann. Das Isoliergas wird dann von der Prüfvorrichtung aufgenommen, ohne dass Isoliergas entweicht. Und schließlich enthält die Prüfvorrichtung einen Vorrat an Isoliergas, das der Kupplung 21 und damit dem Gasraum 17 zugeführt werden kann.

Im Prüfbetrieb wird nunmehr der Druck in dem Gasraum 17 mit Hilfe der Prüfvorrichtung verändert. Dies kann dadurch erfolgen, dass dem Gasraum 17 Isoliergas entnommen oder zugeführt wird. Es wird darauf hingewiesen, dass aufgrund des geschlossenen Absperrorgans 20 diese Veränderung des Drucks im Gasraum 17 zu keiner Veränderung des Drucks des Isoliergases in den Kurbelkästen 11 führt.

Dann wird der an der Füllkupplung 21 anstehende Druck von dem Referenz-Drucksensor der Prüfvorrichtung gemessen. Dieser Druck entspricht dabei dem Druck des Isoliergases in dem Gasraum 17. Gleichzeitig wird der Druck in dem Gasraum 17 auch von dem Dichtewächter 15 der Überwachungseinrichtung 14 gemessen und auf dem Anzeigefeld angezeigt. Die beiden gemessenen Drücke können nunmehr miteinander verglichen werden. Weicht der von dem Dichtewächter 15 gemessene Druck um einen vorgebbaren Differenzwert von dem von dem Referenz-Drucksensor der Prüfvorrichtung gemessenen Druck ab, so kann man daraus auf eine Fehlfunktion oder eine Ungenauigkeit oder dergleichen des Dichtewächters 15 der Überwachungseinrichtung 14 schließen.

Mit Hilfe der Prüfvorrichtung kann somit der Dichtewächter 15 der Überwachungseinrichtung 14 auf eine Fehlfunktion oder eine unzulässige Ungenauigkeit oder dergleichen überprüft werden.

Vom Prüfbetrieb kann danach wieder in den normalen Betrieb des elektrischen Schaltgeräts 10 übergegangen werden, indem das Absperrorgan 20 wieder in seine geöffnete Stellung überführt wird und die Prüfvorrichtung entfernt wird.

Wie bereits erwähnt wurde, kann das Absperrorgan 20 beispielsweise im Wesentlichen aus einem Kugelventil mit einer zentralen Durchgangsbohrung bestehen. In der Figur 2b, in der diese Ausgestaltung beispielhaft dargestellt ist, ist das Kugelventil mit dem Bezugszeichen 20` und die Durchgangsbohrung mit dem Bezugszeichen 20" gekennzeichnet. Das Kugelventil 20' kann beispielsweise mit Hilfe von Dichtungen gasdicht in das Gehäuseteil 16 eingesetzt sein.

Wie aus der Figur 2b hervorgeht, ist das Kugelventil 20' mit einer Welle 23 oder dergleichen gekoppelt, die etwa quer zu der Richtung der Durchgangsbohrung 20" ausgerichtet und drehfest mit dem Kugelventil 20' gekoppelt ist. Die Welle 23 ist aus dem Gehäuseteil 16 herausgeführt und damit von außen zugänglich. Die Welle 23 kann beispielsweise mit Hilfe von Dichtungen gasdicht in dem Gehäuseteil 16 untergebracht sein. Weiterhin kann die Welle 23 mit Hilfe von Schrauben innerhalb des Gehäuseteils 16 fixiert sein.

Die Welle 23 ist um ihre Achse drehbar. Ein Drehen der Welle 23 hat zur Folge, dass auch das Kugelventil 20' entsprechend gedreht wird. Aufgrund der Ausrichtung der Durchgangsbohrung 20" hat die Drehung des Kugelventils 20' zur Folge, dass die Durchgangsbohrung 20" entweder mit dem Kanal 18 verbunden ist oder nicht verbunden ist. Über die Welle 23 kann somit das Absperrorgan 20 zwischen seiner geöffneten und geschlossenen Stellung hin und her bewegt werden.

Außerhalb des Gehäuseteils 16 ist die Welle 23 drehfest mit einem Hebel 24 verbunden. In der Figur 2b wird dies beispielhaft mit Hilfe einer Schraube 25 erreicht. Der Hebel 24 kann beispielsweise die Gestalt einer länglichen Leiste oder dergleichen besitzen. Der Hebel 24 ist damit zusammen mit der Welle 23 und dem Kugelventil 20' um die Achse der Welle 23 schwenkbar. Dies ist gleichbedeutend damit, dass der Hebel 24 hin und her schwenkbar ist und dabei das Absperrorgan öffnet und schließt.

In der Figur 3a ist die Überwachungseinrichtung 14 perspektivisch dargestellt. In der Figur 3a ist insbesondere der Dichtewächter 15, das Gehäuseteil 16, die Kupplung 21, der Hebel 24 und die Schraube 25 zu sehen. Weiterhin ist zu erkennen, dass der Dichtewächter 15 - wie bereits erwähnt wurde - mit einem Anzeigefeld versehen ist, auf dem der aktuell gemessene Druck ablesbar ist. In der Figur 3a befindet sich die Überwachungseinrichtung 14 in ihrem normalen Betrieb. Dies bedeutet, dass das Absperrorgan geöffnet ist und der Dichtewächter 15 die Dichte des Isoliergases in den Kurbelkästen 11 überwacht.

Zur visuellen Verdeutlichung dieses normalen Betriebs ist der Hebel 24 derart ausgerichtet, dass er sich nicht vor dem Anzeigefeld des Dichtewächters 15 befindet. Einer Bedienperson wird dadurch vermittelt, dass der auf dem Anzeigefeld angezeigte Druck "gültig" ist, dass also der Dichtewächter 15 die Dichte des Isoliergases überwacht und den Druck des Isoliergases in den Kurbelkästen misst und anzeigt. Beispielhaft ist der Hebel 24 in der Figur 3a etwa horizontal ausgerichtet.

Aus der Figur 3b geht hervor, dass der Hebel 24 in seiner etwa horizontalen Stellung einerseits verrastet und gegebenenfalls auch noch verschlossen werden kann. Es wird darauf hingewiesen, dass diese Maßnahmen nicht zwingend vorhanden sein müssen und auch einzeln vorhanden sein können.

So ist der Hebel 24 in der Figur 3b mit einer abstehenden Lasche 26 versehen, die in eine Öffnung 27 eines an dem Gehäuseteil 16 gehaltenen Winkels 28 eingreifen kann. Wird der Hebel in die etwa horizontale Stellung geschwenkt, so wird der Hebel 24 automatisch mit der Öffnung 27 verrastet. Diese Verrastung kann dadurch wieder aufgehoben werden, dass die Lasche 26 manuell aus der Öffnung 27 herausgedrückt wird. Danach kann der Hebel 24 aus seiner etwa horizontalen Stellung verschwenkt werden.

Mit Hilfe des Verrastens des Hebels 24 kann ein unbeabsichtigtes Umschalten der Überwachungseinrichtung 14 in den Prüfbetrieb vermieden wird. Stattdessen muss eine Bedienperson manuell die Verrastung lösen und gleichzeitig den Hebel 24 verschwenken. Dies stellt eine sogenannte Zwei-Hand-Bedienung dar, die eine ungewollte Betätigung des Hebels 24 sicher verhindert.

Weiterhin sind der Hebel 24 und der Winkel 28 in der Figur 3b mit jeweils einem Loch 29 versehen, durch die ein Vorhängeschloss 30 hindurchgesteckt ist. Damit kann der Hebel 24 in seiner etwa horizontalen Stellung verschlossen werden. Mit Hilfe des Verschließens des Hebels 24 kann eine unbefugte Betätigung des Hebels 24 und damit ein unbefugtes Umschalten der Überwachungseinrichtung 14 in den Prüfbetrieb sicher verhindert werden.

In den Figuren 4a und 4b ist die Überwachungseinrichtung 14 mit geschlossenem Absperrorgan 20 gezeigt. Die Figur 4b entspricht dabei - abgesehen von der Stellung des Absperrorgans 20 - im Wesentlichen der Figur 2a.

Die Überwachungseinrichtung 14 der Figuren 4a und 4b befindet sich also im Prüfbetrieb. In diesem Fall ist der Gasraum 17 von den Kurbelkästen 11 abgetrennt und der Dichtewächter 15 überwacht nicht die Dichte des Isoliergases und zeigt nicht den Druck des Isoliergases in den Kurbelkästen 11 an. Wie erläutert wurde, kann die geschlossene Stellung des Absperrorgans 20 - ausgehend von der geöffneten Stellung der Figuren 2a, 2b, 3a, 3b dadurch erreicht werden, dass das Absperrorgan 20 mit Hilfe des Hebels 24 um etwa 90 Grad gedreht wird.

Zur visuellen Verdeutlichung des Prüfbetriebs ist der Hebel 24 im Prüfbetrieb derart ausgerichtet, dass er sich vor dem Anzeigefeld des Dichtewächters 15 befindet. Eine Bedienperson hat damit keine freie Sicht auf das Anzeigefeld. Einer Bedienperson wird dadurch vermittelt, dass der auf dem Anzeigefeld angezeigte Druck "nicht gültig" ist, dass also der Dichtewächter 15 nicht den Druck des Isoliergases in den Kurbelkästen 11 anzeigt und auch nicht die Dichte des Isoliergases überwacht. Beispielhaft ist der Hebel 24 in der Figur 4a etwa vertikal ausgerichtet und befindet sich damit etwa vor dem Anzeigefeld des Dichtewächters 15.

Weiterhin geht aus der Figur 4a hervor, dass die Lasche 26 des Hebels 24 im Prüfbetrieb nicht mit der Öffnung 27 des Winkels 28 verrastet ist und dass auch kein Vorhängeschloss 30 vorhanden ist.

Ergänzend wird darauf hingewiesen, dass die Überwachungseinrichtung 14 auch zwei- oder mehrteilig ausgeführt sein kann. So ist es insbesondere möglich, dass der Dichtewächter 15 und das Gehäuseteil 16 nicht unmittelbar miteinander verbunden sind, wie dies erläutert wurde, sondern dass stattdessen der Dichtewächter 15 und das Gehäuseteil 16 jeweils separate Bauteile darstellen, die entfernt voneinander angeordnet sind, und die dann beispielsweise über eine Gasleitung miteinander verbunden sind. Weiterhin ist es möglich, dass das Absperrorgan 20 und der Gasraum 17 nicht - wie beschrieben - gemeinsam in dem Gehäuseteil 16 enthalten sind, sondern dass stattdessen das Absperrorgan 20 und der Gasraum 17 in separaten Bauteilen untergebracht sind, die entfernt voneinander angeordnet sind, und die dann beispielsweise über eine Gasleitung miteinander verbunden sind. Schließlich kann auch das erläuterte Anzeigefeld getrennt von dem Dichtewächter 15 angeordnet sein.

Weiterhin wird darauf hingewiesen, dass es im Prüfbetrieb, also bei geschlossenem Absperrorgan 20, möglich ist, den Dichtewächter 15 auszutauschen. Da die Kurbelkästen 11 im Prüfbetrieb von dem Gasraum 17 und damit auch von dem Dichtewächter 15 abgetrennt sind, erfordert ein derartiger Austausch dabei keine weiteren Maßnahmen im Bereich der Kurbelkästen 11. Ebenfalls kann bei einem derartigen Austausch eine Prüfvorrichtung vorhanden sein oder auch nicht.

## Patentansprüche

1. Elektrisches Schaltgerät (10) mit
- mindestens einem mit Isoliergas gefüllten Schaltgerätepol,
- einer Überwachungseinrichtung (14) die einen Dichtewächter (15) und ein Gehäuseteil (16) aufweistund mit
- einer Prüfvorrichtung für den Dichtewächter,
wobei in dem Gehäuseteil (16) ein Gasraum (17) enthalten ist, der mit dem Schaltgerätepol und dem Dichtewächter (15) verbunden ist,
wobei der Gasraum mit der Prüfvorrichtung (15) verbindbar ist,
wobei das Gehäuseteil (16) ein Absperrorgan (20) enthält, **dadurch gekennzeichnet, dass** das Absperrorgan in eine geöffnete und eine geschlossene Stellung betätigbar ist während die Prüfvorrichtung mit dem Gasraum verbunden ist.

2. Elektrisches Schaltgerät (10) nach Anspruch 1,
wobei das Gehäuseteil (16) einen Kanal (18) aufweist, über den der Gasraum (17) mit dem Schaltgerätepol verbunden ist, und
wobei das Absperrorgan (20) im Verlauf des Kanals (18) angeordnet ist.

3. Elektrisches Schaltgerät (10) nach einem der vorstehenden Ansprüche,
wobei in der geöffneten Stellung der Gasraum (17) mit dem Schaltgerätepol und dem Dichtewächter (15) verbunden ist,
während in der geschlossenen Stellung der Gasraum (17) nicht mit dem Schaltgerätepol verbunden ist.

4. Elektrisches Schaltgerät (10) nach Anspruch 3,
wobei der Gasraum (17) in der geschlossenen Stellung mit dem Dichtewächter (15) und einer gegebenenfalls angeschlossenen Prüfvorrichtung verbunden ist.

5. Elektrisches Schaltgerät (10) nach einem der vorstehenden Ansprüche,
wobei eine Kupplung (21) für die Prüfvorrichtung vorgesehen ist,
wobei die Kupplung (21) mit dem Gehäuseteil (16) verbunden ist und den Gasraum (17) zumindest teilweise begrenzt, und
wobei in der Kupplung (21) eine Durchgangsbohrung (22) enthalten ist, über die der Gasraum (17) mit der Prüfvorrichtung verbindbar ist.

6. Elektrisches Schaltgerät (10) nach Anspruch 5,
wobei die Kupplung (21) derart ausgebildet ist, dass die Kupplung die Durchgangsbohrung (22) automatisch verschließt, wenn keine Prüfvorrichtung an die Kupplung angeschlossen ist.

7. Elektrisches Schaltgerät (10) nach einem der vorstehenden Ansprüche,
wobei das Absperrorgan (20) zum Hin- und Herschalten zwischen der geöffneten und der geschlossenen Stellung drehbar ausgebildet ist.

8. Elektrisches Schaltgerät (10) nach Anspruch 7,
wobei das Absperrorgan (20) ein Kugelventil (20') oder ein Kükenventil oder dergleichen aufweist.

9. Elektrisches Schaltgerät (10) nach einem der Ansprüche 7 oder 8,
wobei das Absperrorgan (20) über eine aus dem Gehäuseteil (16) herausgeführte Welle (23) betätigbar ist.

10. Elektrisches Schaltgerät (10) nach einem der vorstehenden Ansprüche,
wobei ein Hebel (24) vorgesehen ist, der mit dem Absperrorgan (20) drehfest gekoppelt ist, und der zur Betätigung des Absperrorgans (20) vorgesehen ist.

11. Elektrisches Schaltgerät (10) nach Anspruch 10,
wobei der Hebel (24) derart ausgebildet ist, dass
der Hebel sich in der geschlossenen Stellung des Absperrorgans (20) derart vor einem Anzeigefeld des Dichtewächters befindet, dass das Anzeigefeld des Dichtewächters (15) zumindest teilweise durch den Hebel verdeckt wird.

12. Elektrisches Schaltgerät (10) nach einem der Ansprüche 10 oder 11,
wobei der Hebel (24) mit einer Lasche (26) versehen ist, die in der geöffneten Stellung des Absperrorgans (20) in eine mit dem Gehäuseteil (16) verbundene Öffnung (27) einrastbar ist.

13. Elektrisches Schaltgerät (10) nach einem der vorstehenden Ansprüche,
wobei in der geschlossenen Stellung des Absperrorgans (20) und mit der angeschlossenen Prüfvorrichtung der Dichtewächter (15) auf eine Fehlfunktion oder unzulässige Ungen6auigkeit überprüfbar ist.

## Claims

1. Electric switching device (10) with
- at least one switching device pole filled with insulating gas,
- a monitoring device (14), which has a density monitor (15) and a housing part (16), with
- a testing device for the density monitor,
wherein the housing part (16) includes a gas chamber (17), which is connected to the switching device pole and the density monitor (15),
wherein the gas chamber can be connected to the testing device (15),
wherein the housing part (16) contains a shut-off element (20),
**characterised in that** the shut-off element can be actuated in an open and a closed position, whilst the testing device is connected to the gas chamber.

2. Electric switching device (10) according to claim 1,
wherein the housing part (16) has a channel (18), by which the gas chamber (17) is connected to the switching device pole, and
wherein the shut-off element (20) is arranged in the course of the channel (18).

3. Electric switching device (10) according to any of the preceding claims,
wherein in the open position the gas chamber (17) is connected to the switching device pole and the density monitor (15),
whilst in the closed position the gas chamber (17) is not connected to the switching device pole.

4. Electric switching device (10) according to claim 3, wherein the gas chamber (17) in the closed position is connected to the density monitor (15) and an optionally connected testing device.

5. Electric switching device (10) according to any of the preceding claims, wherein a coupling (21) is provided for the testing device,
wherein the coupling (21) is connected to the housing part (16) and at least partly delimits the gas chamber (17), and
wherein the coupling (21) contains a through bore (22), by which the gas chamber (17) can be connected to the testing device.

6. Electric switching device (10) according to claim 5,
wherein the coupling (21) is configured such that the coupling automatically closes the through bore (22), when no testing device is connected to the coupling.

7. Electric switching device (10) according to any of the preceding claims,
wherein the shut-off element (20) is configured to be rotatable for switching back and forth between the open and the closed position.

8. Electric switching device (10) according to claim 7,
wherein the shut-off element (20) has a ball valve (20') or a plug valve or the like.

9. Electric switching device (10) according to any of claims 7 or 8,
wherein the shut-off element (20) can be activated via a shaft (23) leading out of the housing part (16).

10. Electric switching device (10) according to any of the preceding claims, wherein a lever (24) is provided, which is coupled to the shut-off element (20) in a rotationally secure manner and which is provided for actuating the shut-off element (20).

11. Electric switching device (10) according to claim 10,
wherein the lever (24) is configured such that
the lever in the closed position of the shut-off element (20) is positioned in front of a display field of the density monitor in such a way that the display field of the density monitor (15) is covered at least partly by the lever.

12. Electric switching device (10) according to any of claims 10 or 11, wherein the lever (24) is provided with a tab (26), which in the open position of the shut-off element (20) can be latched into an opening (27) connected to the housing part (16).

13. Electric switching device (10) according to any of the preceding claims, wherein in the closed position of the shut-off element (20) and with the connected testing device the density monitor (15) can be checked for a malfunction or impermissible inaccuracy.

## Revendications

1. Appareil de coupure électrique (10) avec
- au moins un pôle d'appareil de coupure rempli de gaz isolant,
- un système de surveillance (14), qui présente un densimètre (15) et une partie de boîtier (16), et avec
- un dispositif de test pour le densimètre,
dans lequel est contenu dans la partie de boîtier (16) un compartiment à gaz (17), qui est relié au pôle d'appareil de coupure et au densimètre (15),
dans lequel le compartiment à gaz peut être relié au dispositif de test (15),
dans lequel la partie de boîtier (16) contient un organe d'arrêt (20), **caractérisé en ce que** l'organe d'arrêt peut être actionné dans une position ouverte et dans une position fermée tandis que le dispositif de test est relié au compartiment de gaz.

2. Appareil de coupure électrique (10) selon la revendication 1,
dans lequel la partie de boîtier (16) présente un canal (18), par l'intermédiaire duquel le compartiment à gaz (17) est relié au pôle d'appareil de coupure, et
dans lequel l'organe d'arrêt (20) est disposé dans l'extension du canal (18).

3. Appareil de coupure électrique (10) selon l'une quelconque des revendications précédentes,
dans lequel dans la position ouverte, le compartiment à gaz (17) est relié au pôle d'appareil de coupure et au densimètre (15),
tandis que dans la position fermée, le compartiment à gaz (17) n'est pas relié au pôle d'appareil de coupure.

4. Appareil de coupure électrique (10) selon la revendication 3,
dans lequel le compartiment à gaz (17) est relié, dans la position fermée, au densimètre (15) et à un dispositif de test raccordé éventuellement.

5. Appareil de coupure électrique (10) selon l'une quelconque des revendications précédentes,
dans lequel un couplage (21) est prévu pour le dispositif de test,
dans lequel le couplage (21) est relié à la partie de boîtier (16) et délimite au moins en partie le compartiment à gaz (17), et
dans lequel est contenu dans le couplage (21) un alésage de passage (22), par l'intermédiaire duquel le compartiment à gaz (17) peut être relié au dispositif de test.

6. Appareil de coupure électrique (10) selon la revendication 5,
dans lequel le couplage (21) est réalisé de telle manière que le couplage ferme automatiquement l'alésage de passage (22) lorsqu'aucun dispositif de test n'est raccordé au couplage.

7. Appareil de coupure électrique (10) selon l'une quelconque des revendications précédentes,
dans lequel l'organe d'arrêt (20) est réalisé de manière à pouvoir tourner entre la position ouverte et la position fermée pour assurer une commutation en va-et-vient.

8. Appareil de coupure électrique (10) selon la revendication 7,
dans lequel l'organe d'arrêt (20) présente une soupape sphérique (20') ou une soupape à boisseau ou similaire.

9. Appareil de coupure électrique (10) selon l'une quelconque des revendications 7 ou 8,
dans lequel l'organe d'arrêt (20) peut être actionné par l'intermédiaire d'un arbre (23) guidé de manière à sortir de la partie de boîtier (16).

10. Appareil de coupure électrique (10) selon l'une quelconque des revendications précédentes,
dans lequel un levier (24) est prévu, qui est couplé de manière solidaire en rotation à l'organe d'arrêt (20) et qui est prévu pour actionner l'organe d'arrêt (20).

11. Appareil de coupure électrique (10) selon la revendication 10,
dans lequel le levier (24) est réalisé de telle manière que
le levier se trouve dans la position fermée de l'organe d'arrêt (20) devant un champ d'affichage du densimètre de telle manière que le champ d'affichage du densimètre (15) est dissimulé au moins en partie par le levier.

12. Appareil de coupure électrique (10) selon l'une quelconque des revendications 10 ou 11,
dans lequel le levier (24) est pourvu d'une languette (26), qui peut être enclenchée dans une ouverture (27) reliée à la partie de boîtier (16) dans la position ouverte de l'organe d'arrêt (20).

13. Appareil de coupure électrique (10) selon l'une quelconque des revendications précédentes,
dans lequel dans la position fermée de l'organe d'arrêt (20) et avec le dispositif de test raccordé, un dysfonctionnement ou une imprécision non admise du densimètre (15) peuvent être vérifiés.
